# EUROPEAN PATENT SPECIFICATION

(11) **EP 1 097 907 B1**
(45) Date of publication and mention of the grant of the patent: **28.04.2004**
(21) Application number: 99670007.6
(22) Date of filing: 02.11.1999
(51) Int. Cl.: C02F 1/72

(54) **A process for the treatment of liquid effluents by means of clean catalytic oxidation, using hydrogen peroxide and heterogeneous catalysis**
Verfahren für die Behandlung von flüssigen Abfluss-Stoffen durch reine katalytische Oxydierung, Wasserstoffperoxyd und eine heterogene Katalyse benützend
Procédé pour le traitement d'effluents liquides par oxydation catalytique pro-pre, utilisant le peroxyde d'hydrogène et la catalyse hétérogène

(43) Date of publication of application: 09.05.2001
(73) Proprietor: Instituto Superior Técnico, 1096 Lisboa Codex (PT); Solvay Interox - Produtos Peroxidados, Lda., 1800 Lisboa (PT)
(72) Inventor: Martins Dias, Susete Maria, Rinchoa, 2635-341 Rio de Mouro (PT); Maggiolly Novais, Julio, 1600-419 Lisboa (PT); Costa Guedes Da Silva, Manuel José, 2700-151 Amadora (PT)
(74) Representative: Pereira da Cruz, Joao

(56) References cited:
- WO-A-97/08101
- DE-A- 4 137 864
- DATABASE WPI Section Ch, Week 198743 Derwent Publications Ltd., London, GB; Class A97, AN 1987-303814 XP002134883 & JP 62 214399 A (NIPPON GENSHIRYOKU JIGYO KK), 21 September 1987 (1987-09-21)
- PATENT ABSTRACTS OF JAPAN vol. 007, no. 139 (C-171), 17 June 1983 (1983-06-17) & JP 58 051982 A (DOUWA KOGYO KK), 26 March 1983 (1983-03-26)
- PATENT ABSTRACTS OF JAPAN vol. 008, no. 003 (C-203), 7 January 1984 (1984-01-07) & JP 58 170591 A (TOUA DENPA KOGYO KK), 7 October 1983 (1983-10-07)

## Description

### FIELD OF THE INVENTION

The process which is the subject of this invention relates to the treatment of effluents, for example from olive mills, by means of catalytic oxidation with hydrogen peroxide, using heterogeneous catalysis, in the presence of metallic pairs with anodic and cathodic characteristics.

### BACKGROUND OF THE INVENTION

The various processes available for the treatment of effluents, for example those generated by olive mills, are demanding in terms of time, space and energy consumption. The application of olive mill effluents to the soil without any previous treatment can damage the structure and the bioactivity of the soil, due in part to the high polyphenol content and the phytotoxicity of these compounds.

In addition, aerobic and anaerobic biological treatment processes are often problematical due to the high organic and polyphenol content of olive mill effluent, which leads to long periods of biomass acclimatisation and low success rates. The use of lagoons or other drying systems often produces strong odours due to the direct emission of sulphurous gases during anaerobic processes or organic acids that build up in vapour condensates. As olive mills have greatly varying capacities, a new process should be flexible and easy to use, allowing the safe use of the recovered water or the discharge thereof to a biological treatment station. The black/reddish-brown colour of the effluent should be eliminated in any new approach to the treatment of such effluent.

M.F. Rosa e A.M. Vieira, "Perspectivas e limitações no tratamento e utilização das águas residuais de lagares de azeite: situação portuguesa", *Boletim de Biotecnologia,* n° 52, December 1995, refer to treatment systems which use oxidation or evaporation basins. However, these systems have major inconveniences such as large area requirements, the production of odours and the formation of sludge deposits.

A. Lanzani, P. Bondioli, E. Fedeli, A. Ponzetti, G. Pieralisi, "Un processo per lo smaltimento integrale delle acque di vegetazione con contemporanea valorizzazione delle sanse nella lavorazione delle olive", *La rivista delle Sostanze Grasse,* Vol. LXV, February 1988, describe a process which uses concentration by evaporation. This process too has some disadvantages, such as high energy costs, the caramelisation of sugars and the formation of condensates of organic acids

L. Martinez Niet, Garrido Hoyos, F. Camacho Rubio, M.P. Garcia Pareja & A. Ramos Cormenzana, "The biological purification of waste products from olive oil extraction", *Biosource Technology 43*, pp. 215-219, 1993, describe a process that uses mushrooms for the biological elimination of polyphenols. The major problem is that the adsorption kinetics is very slow.

M. Chakchouk, M. Hamdi, J.N. Foussard, H. Debellefontaine, "Complete treatment of olive mill effluent by a wet air oxidation process coupled with a biological step", *Environmental Technology,* Vol. 15, pp. 323-332, describe treatment systems by wet oxidation with peroxide. However, these systems require fairly high temperatures and pressures.

Treatment systems based on the use of hydrogen peroxide are, in principle, a clean technology. However, the use of catalysts in liquid phase (for instance iron (III) sulphate solution, Fe₂(SO₄)₃) leads to the formation of precipitates which are difficult to eliminate (mainly hydroxides), causing severe environmental problems. Furthermore, the use of this type of catalyst requires the control of the addition of the catalyst, which adds additional complications to the process. On the other hand, this process does not achieve colour reductions greater than 70%, under normal pressure and temperature conditions.

### SUMMARY OF THE INVENTION

The present invention allows the elimination of toxicity, colour and odours of effluents of the food-processing industry by catalytic oxidation, with hydrogen peroxide, using heterogeneous catalysis, in the presence of metallic pairs with anodic and cathodic characteristics. The pre-treated residues can be used for irrigation and in the production of acetate or biogas. This process can be applied to effluents of the food-processing industry (olive oil mills, distilleries, sugar refineries, the coffee industry, the tanning industry, etc.).

The process eliminates nearly all the toxic polyphenol compounds of liquid effluents, as well as odours and coloration, allowing the discharge thereof to final treatment systems and/or subsequent reutilization. It also involves low energy costs and oxidation occurs at a low temperature.

### DETAILED DESCRIPTION OF THE INVENTION

The catalytic oxidation of effluents, for example from olive mills, is an alternative process for the pre-treatment of effluents, allowing them to be used for irrigation in agriculture or to be discharged to municipal sewage systems. In particular, the olive oil industry would be interested in this new, easy to apply and more profitable process (low maintenance costs), which can moreover be adapted to olive mills of any capacity.

This catalytic oxidation process can be used in the detoxification of a vast range of agro-industrial effluents, requiring minimal adaptation of the process in order to adjust it to the characteristics of the effluent. The main applications of the process include the treatment of coloured effluents with an odour and a certain level of polyphenols (for example, effluents from olive mills, distilleries, sugar refineries, the coffee industry, tanneries, etc.).

The same process can be applied to the production of acetate derivatives, leading to a new industrial use for resources with otherwise little value.

This process for the treatment of effluents achieves a high detoxification level, has low demands in terms of energy and time and allows for the possibility of reusing the treated effluent for irrigation. Apart from this, it also allows for subsequent treatment in both aerobic and anaerobic systems. The process is highly effective in decolorisation and it can also be used in the production of organic and inorganic acetate derivatives of industrial value. Another advantage of the present process is that it does not produce sludge, as in the case of homogeneous catalytic oxidation processes (for example, due to iron oxide precipitates).

More specifically, the subject of the present invention is a process for the treatment of effluents, by means of catalytic oxidation with hydrogen peroxide, using a heterogeneous catalyst in the presence of a metallic pairs with anodic and cathodic characteristics.

The aforementioned metallic pairs should preferably be iron and copper, which are immersed in the effluent to be treated, where the decomposition of the hydrogen peroxide takes place.

One of the main advantages of this process over the use of liquid catalysts is the self-regeneration of the metals by means of a process of oxidation/reduction of their ions, which leads to only a trace of the metals in solution, therefore overcoming the usual need for a step involving their recovery and/or elimination from the peroxidised effluent, which means that this invention be classified as a clean technology.

Another advantage of the use of heterogeneous catalysts is the fact that it is not necessary to control the addition of the catalyst, contrary to processes that use a liquid catalyst, where the control of the catalyst addition is absolutely necessary.

This process allows an organic content reduction of around 50%, a reduction in toxicity of more than 80% and a reduction in colour greater than 75%, with low costs in terms of reagents and energy under normal pressure and temperature conditions.

This treatment system has a high degree of automation and is easy to operate. The area required for the installation of the equipment necessary for the treatment depends on the required capacity and on the chosen system - fixed or mobile unit, pond, storage tank or other (for example, for a unit with a treatment capacity of 7 m³/h, the area occupied is less than 8 m²). The system can operate continuously without modifications to the unit or the system set-up, for various industrial effluents/applications.

### EXPERIMENTAL PART

The process which is the subject of the present invention consists of the treatment of liquid effluents containing concentration less than 100g/l of Chemical Oxygen Demand (COD) and less than 10 g/l of polyphenolic compounds, by means of catalytic oxidation, with hydrogen peroxide, using as heterogeneous catalyst a pair of two different metal bars; selected according their cathodic or anodic characteristics.

Liquid effluents, with a certain COD concentration and polyphenol content, are very diverse, for example effluents generated by olive mills, distilleries, sugar refineries, the coffee industry and tanneries. Olive mill effluents will be considered in detail here.

The COD concentration is less than 100 g/L, with average values between 30 and 70 g/L.

The initial pH is usually acid with average values of between 3.5 and 5.5.

The polyphenol compound content is usually less than 10g/L. The average values are less than 5 g/L and preferably between 1.5 and 4 g/L.

The hydrogen peroxide concentration is generally less than 10 % and preferably between 1 and 5 %.

Normally the process takes place in a continuously stirred reactor, at approximately atmospheric pressure and temperatures between 20 and 70°C. The process is preferably carried out at atmospheric pressure and at a temperature of between 30 and 60° C.

The retention time is usually less than 1 hour, preferably between 15 and 40 minutes.

These preferred retention times permit oxidation efficiency greater than 35% for the COD, preferably greater than 45%, and greater than 98% for polyphenolic compounds, preferably greater than 99%.

The final pH is lower than the initial pH, preferably between 1.5 and 3.5.

Colour removal is usually greater than 75% and preferably greater than 78%.

Odour removal is usually greater than 90% and preferably greater than 95%.

To improve the efficiency of the process of the present invention, it is advisable to use a retention basin that will contribute to the oxidation efficiency. It is also advisable to neutralise the treated effluent, so that it may be applied as a fertiliser.

The following examples are simply intended to better illustrate the invention and they do not limit the scope of the invention.

### Examples

### Example 1 (Comparative)

The oxidation of a liquid effluent generated by a continuous olive extraction process was carried out. The initial COD concentration was 45.6 g/L, the pH was 4.15 and the phenol content was 3g/L, with 2% hydrogen peroxide, in a continuously stirred reactor, at a temperature of 45° C and at atmospheric pressure. The efficiency obtained in the process for retention times of 20 and 40 minutes was 21% and 24% respectively for COD removal and 99.9% in both cases for phenolic compound removal. The final pH values were 3.2 and 2.8 respectively. The colour removal was 55% and 62% respectively.

### Example 2

The oxidation of a liquid effluent generated by a continuous olive extraction process was carried out. The initial COD concentration was 45.6 g/L, the pH was 4.17 and the phenol content was 3 g/L, with 2% hydrogen peroxide, in a continuously stirred reactor, at a temperature of 45° C and at atmospheric pressure. The efficiency obtained in the process for retention times of 20 minutes, in the presence of Fe³⁺ and Cu²⁺ as metal bars immersed in the reactor was 42% for COD removal and 99.9% for phenolic compound removal. The final pH was 3.1. The colour removal was 80%.

### Example 3 (Comparative)

The oxidation of a liquid effluent generated by a continuous olive extraction process was carried out. The initial COD concentration was 59.8 g/L, the pH was 4.3 and the phenol content was 2.6 g/L, with 2.5% hydrogen peroxide, in a continuously stirred reactor, at a temperature of 38° C and at atmospheric pressure. The efficiency obtained in the process for retention times of 20 minutes was 18% for COD removal and 99.5% for phenolic compound removal, in the presence of 800 ppm of Fe³⁺ added in the form of Fe₂(SO₄)₃. The final pH was 2.4. The colour removal was 66%.

### Example 4

The oxidation of a liquid effluent generated by a continuous olive extraction process was carried out. The initial COD concentration was 59.8 g/L, the pH was 4.3 and the phenol content was 2.6 g/L, with 2.0% hydrogen peroxide, in a continuously stirred reactor, at a temperature of 54° C and at atmospheric pressure. For a retention time of 20 minutes, the efficiency of the process was 60% for COD removal and 99.9% for phenolic compound removal, in the presence of Fe³⁺ and Cu²⁺ in the form of solid metal bars. The final pH was 2.15. The colour removal was 78%.

### Example 5

The oxidation of a liquid effluent generated by a continuous extraction process was carried out. The initial COD concentration was 47.3 g/L, the pH was 4.4 and the phenol content was 2.9 g/L, with 10.0% hydrogen peroxide, in a continuously stirred reactor, at a temperature of 42° C and at atmospheric pressure. For a retention time of 30 minutes, the efficiency of the process was 48% for COD removal and 99.0% for phenolic compound removal, in the presence of Fe³⁺ and Cu²⁺ in the form of solid metal bars. The final pH was 2.3. The colour removal was 80%.

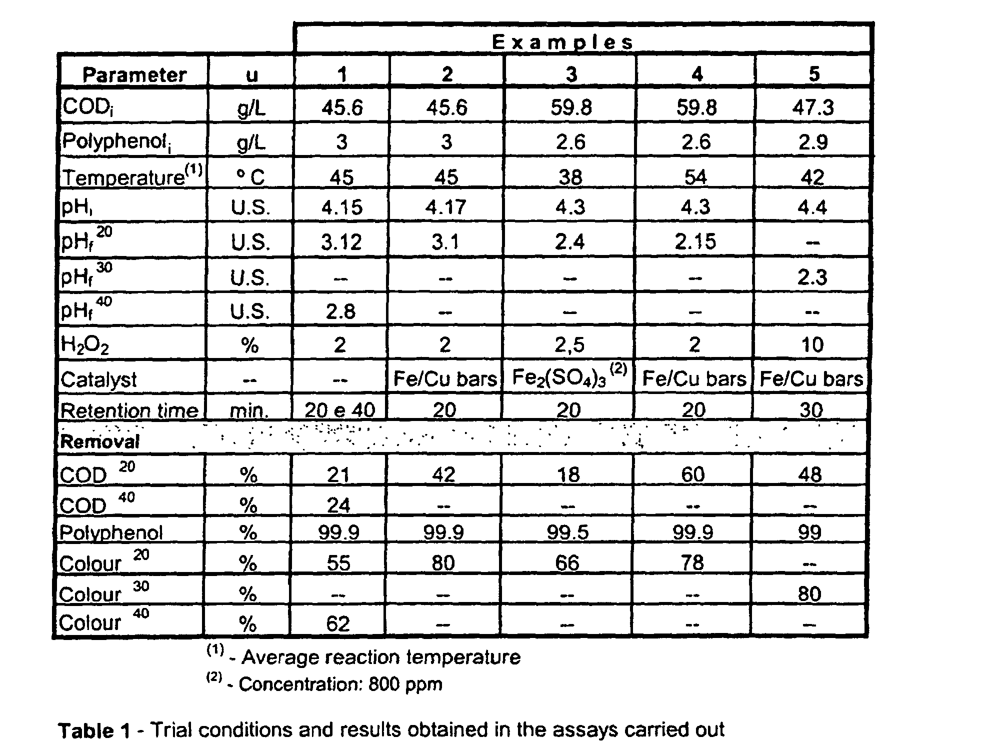

As can be seen from the above table, the present process (Examples 2, 4 and 5) has significant advantages in relation to prior art (Examples 1 and 3). In particular, the increased efficiency obtained for the COD concentration is between 100% and a value greater than 200%, and for the removal of colour between 18% and 45%.

## Claims

1. Process for the treatment of liquid effluents containing concentrations less than 100 g/l of COD and less than 10 g/l of polyphenolic compounds, by means of catalytic oxidation with hydrogen peroxide, **characterised in that** one pair of two different metal bars selected according their cathodic or anodic characteristics is used as catalyst.

2. Process according to claim 1, **characterised in that** the metals are iron and copper.

3. Process according to claim 1 or 2, **characterised in that** the liquid effluents, with high concentrations of COD and containing polyphenolic compounds, are selected from effluents produced in olive oil mills, distilleries, sugar refineries, the coffee industry, tanneries, among others.

4. Process according to any of claims 1 to 3, **characterised in that** the initial pH value is between 3.5 and 5.5 and by a concentration of hydrogen peroxide of between 1 and 5%.

5. Process according to any of claims 1 to 46, **characterised in that** the process is carried out at atmospheric pressure and at a temperature of between 30 and 60° C.

6. Process according to any of claims 1 to 5, **characterised in that** the retention time is normally less than one hour.

7. Process according to claim 6, **characterised in that** the retention time is between 15 and 40 minutes.

8. Process according to any of claims 1 to 7, **characterised by** the occurrence of self-regeneration of the metals due to a process of oxidation/reduction of their ions.

9. Process according to any of claims 1 to 8, **characterised in that** it is not necessary to control the addition of the catalyst.

10. Process according to any of claims 1 to 8, **characterised in that** the treated effluent is neutralised, in order to allow its application as a fertiliser.

11. Process according to any of claims 1 to 8 **characterised in that** it can also be applied in the production of acetate derivatives.

## Patentansprüche

1. Verfahren für die Behandlung von Abwässern mit einem Inhalt von weniger als 100 g/L COD und weniger als 10 g/L polyphenolischen Verbindungen durch katalytische Oxidation mit Wasserstoffperoxid, **dadurch gekennzeichnet, dass** ein Paar von zwei verschiedenen Metallstäben verwendet wird, die aufgrund deren kathodischen und anodischen Eigenschaften ausgewählt wurden.

2. Verfahren gemäß Patentanspruch 1, **dadurch gekennzeichnet, dass** es sich bei den verwendeten Metallen um Eisen und Kupfer handelt.

3. Verfahren gemäß Patentanspruch 1 oder 2, **dadurch gekennzeichnet, dass** die Abwässer, die mit einer hohen Konzentration an COD und polyphenolische Verbindungen versetzt sind, von Abwässern stammen, die Olivenölmühlen, Brennereien, Zuckerraffinerien, Kaffeeindustrie, Gerbereien, usw. zugeordnet sind.

4. Verfahren gemäß Patentanspruch 1 bis 3, **dadurch gekennzeichnet, dass** der anfängliche pH-Wert zwischen 3,5 und 5,5 und die Konzentration an Wasserstoffperoxid zwischen 1 und 5% liegt.

5. Verfahren gemäß Patentanspruch 1 bis 4, **dadurch gekennzeichnet, dass** die Prozessführung bei Atmosphärendruck und einer Temperatur zwischen 30 und 60 °C liegt.

6. Verfahren gemäß Patentanspruch 1 bis 5, **dadurch gekennzeichnet, dass** die Retentionszeit üblicherweise bei weniger als einer Stunde liegt.

7. Verfahren gemäß Patentanspruch 6, **dadurch gekennzeichnet, dass** die Retentionszeit zwischen 15 und 40 Minuten liegt.

8. Verfahren gemäß Patentanspruch 1 bis 7, **dadurch gekennzeichnet, dass** eine Selbstregeneration der Metalle durch einen Redoxprozess deren Ionen auftritt.

9. Verfahren gemäß Patentanspruch 1 bis 8, **dadurch gekennzeichnet, dass** die Zugabe an Katalyt nicht kontrolliert werden muss.

10. Verfahren gemäß Patentanspruch 1 bis 8, **dadurch gekennzeichnet, dass** eine Neutralisierung des behandelten Abwassers eine Verwendung als Düngemittel erlaubt.

11. Verfahren gemäß Patentanspruch 1 bis 8, **dadurch gekennzeichnet, dass** das Verfahren auch in der Produktion von Azetatderivaten Verwendung finden kann.

## Revendications

1. Procédé pour le traitement d'effluents liquides avec des concentrations inférieures à 100 g/l en DCO et à 10 g/l en composés polyphénoliques, par oxydation catalytique au peroxyde d'hydrogène, **caractérisé en ce que** une paire de différentes barres métalliques, choisies en fonction de leurs respectives caractéristiques anodiques et cathodiques.

2. Procédé selon la revendication 1, **caractérisé en ce que** les métaux sont le fer et le cuivre

3. Procédé selon les revendications 1 et 2, **caractérisé en ce que** les effluents liquides, avec de hautes concentrations en DCO et contenant des composés polyphénoliques, sont sélectionnés des effluents produits dans les explorations d'huile des olives, distilleries, raffineries du sucre de l'industrie du café, des tanneries, parmi d'autres.

4. Procédé selon l'une quelconque des revendications 1 à 3, **caractérisé en ce que** la valeur initiale de pH se situe entre 3,5 et 5,5. et la concentration du peroxyde d'hydrogène entre 1 et 5%.

5. Procédé selon l'une quelconque des revendications 1 à 4, **caractérisé en ce que** le procédé est effectué à la pression atmosphérique et à une température entre 30 et 60°C.

6. Procédé selon l'une quelconque des revendications 1 à 5, **caractérisé en ce que** le temps de rétention est normalement inférieur à une heure.

7. Procédé selon la revendication 6, **caractérisé en ce que** le temps de rétention se situe entre les 15 et les 40 minutes.

8. Procédé selon l'une quelconque des revendications 1 à 7, **caractérisé en ce que** l'occurrence de l'auto régénération des métaux résultant de l'oxydation/réduction des ions.

9. Procédé selon l'une quelconque des revendications 1 à 8, **caractérisé en ce qu'**il n'est pas nécessaire de contrôler l'addition du catalyseur.

10. Procédé selon l'une quelconque des revendications 1 à 8, **caractérisé en ce que** l'effluent traité est neutralisé de façon à permettre son application comme fertiliseur.

11. Procédé selon l'une quelconque des revendications 1 à 8, **caractérisé en ce que** l'effluent peut aussi être appliqué dans la production de dérivés d'acétate.
